# EUROPEAN PATENT APPLICATION

(11) **EP 4 640 348 A1**
(43) Date of publication of application: **29.10.2025**
(21) Application number: 25172448.0
(22) Date of filing: 24.04.2025
(51) Int. Cl.: B23C 5/10

(54) **CUTTING SHANK END MILL**

(30) Priority: 25.04.2024 CZ 20240165
(71) Applicant: UniCut s.r.o., 33701 Rokycany (CZ)
(72) Inventor: DIVIS, Vaclav, Praha 3, Zizkov (CZ); INEMANN, Petr, 33701 Rokycany (CZ)
(74) Representative: Kratochvil, Vaclav

(57) **Abstract**

A cutting shank end mill includes a clamping shank and an even number of teeth/flutes, where the total cutting length of each tooth is divided into gaps and cutting edges which are as long as the gaps, and the cutting edges on one tooth overlap the gaps on the following tooth, wherein in a plane perpendicular to the axis of the mill and passing through any point of the main part of the total cutting length, on one tooth there is one of the cutting edges and on the following tooth there is one of the gaps. The face of the milling cutter may be equipped with at least a simple concave cutting edge to allow inclined or helical plunging to the full depth of the cutting flute.

## Description

### Field of the Invention

The technical solution concerns a cutting shank end mill comprising a clamping shank, an even number of teeth, and at least two flutes.

### Background of the Invention

Currently, there is an increasing overvaluation of raw materials and base resources, not only in mechanical engineering but across various industries. The range of steels is continuously expanding, with an increasing proportion of valuable alloying elements. While these contribute to improved product properties, they also significantly affect the overall cost.

In this context, greater attention is also being directed towards chip-forming machining processes from this perspective. It is evident that minimizing the amount of valuable material lost as chips will become increasingly desirable. This is also true from the perspective of energy expenditure.

Engraving milling is a common technology in technical practice, and its well-known methods are described below. The aim of the patent solution is to advance these technologies towards higher productivity and profitability of the process.

At the same time, the known range of shank end mills suitable for shape engraving milling can be summarized into the following types:

A standard shank end mill allowing engraving to a material thickness of 3xD (three times the diameter of the mill, Ap = 3xD) with a full width of cut, where the width of cut is equal to the diameter of the mill (Ae = D).

A long high-feed milling cutter, where the cutting part L2 = approximately 2xD, and the shank is relieved up to a length of 5xD, equipped with a steep spiral groove for chip removal from deep grooves. It operates using the method of layer-by-layer or in a spiral with a spiral pitch of 0.1D of the mill.

A short high-feed milling cutter allowing engraving using the layer-by-layer method with a depth of cut Ap = 0.1D of the mill.

There is also patent document US 8047747, which describes a wavy cutting edge. The waviness of the cutting edge results in a variable rake angle. The goal is to dampen vibrations, not to work with chip thickness. It is therefore not about dividing the total cutting length of the cutting edge of each tooth into gaps between individual cutting edges, but rather about a specific wavy cutting edge.

The disadvantage of all high-feed milling cutters is the small cross-section of the chip being removed. For longer perimeters of the workpiece being engraved, the time required is disproportionately extended.

The disadvantages of existing mills are less efficient milling of smaller thicknesses and limited possibilities for engraving final products. Another disadvantage is the relatively high material consumption and the lower productivity and quality of the engraving process for workpieces

### Summary of the Invention

According to an aspect of the invention, a cutting shank end mill is provided comprising a clamping shank and an even number of teeth/flutes, according to this invention. The essence of an aspect of the invention is that the total cutting length of the cutting edge of each tooth is divided by gaps into individual cutting edges, which are of equal length to the gaps, and the cutting edges on one tooth overlap the gaps on the following tooth. In a plane perpendicular to the axis of the mill, passing through any point of the main part of the total cutting edge length, it holds that on one tooth there is a cutting edge, and on the following tooth there is a gap.

In an advantageous embodiment, the face of the mill is provided with at least a single concave cutting edge to allow for angled or spiral milling to full depth of the engraving groove.

An aspect of the invention relates to a shank end mill for engraving final products or semi-finished products from flat material in the form of planar sheets, where various internal cutouts or external shape cuts can be made in this manner. The thickness of these products is limited by the total length of the cutting edge. The smaller the diameter of the mill, the further the mill can reach into the corners or narrow areas of the engraved shape. A smaller diameter of the mill also generates lower cutting forces. Here, the term aspect ratio L/D is introduced, i.e., the total cutting edge length/diameter of the mill. The proposed solution achieves an exceptionally high L/D ratio of 5.

To increase the productivity of engraving, it is necessary to accelerate the initial immersion of the mill to the desired depth, where the actual engraving process then begins. For this purpose, the face of the mill is equipped with a double concave cutting edge. This double cutting edge plays an important role in chip separation for easier clearing of the front space.

Although the mill has a discontinuous cutting edge, it leaves a relatively smooth surface and can create the final shape without additional finishing. The result is material savings and increased production productivity.

### Brief Description of the Drawings

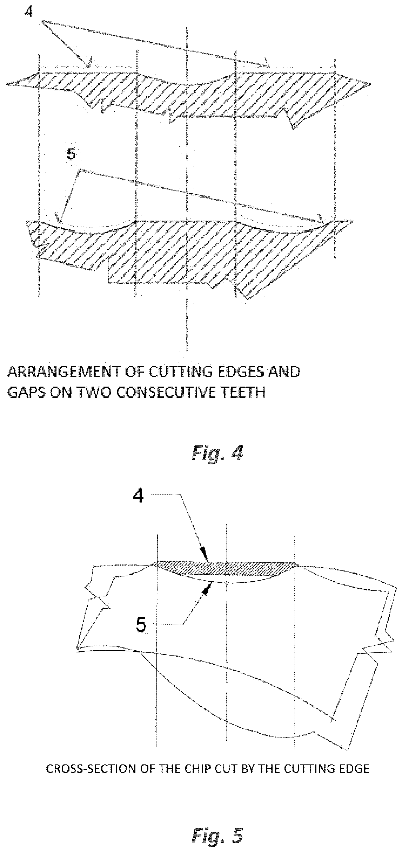

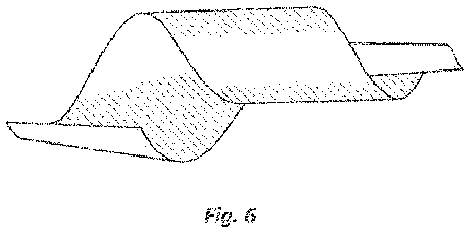

The engraving shank end mill according to this invention will be described in detail with reference to a specific embodiment using the accompanying drawings, where in Fig. Fig. 1 is a plan view of a product manufactured using the mill according to this solution. Fig. 2 is a model milling cutter in profile Fig. 3 shows the double concave cutting edge on the face of the mill. Fig. 4 is a side view showing a detail of the cutting edges. Fig. 5 is an axial section with the removed chip. Fig. 6 shows a typical chip shape.

### Embodiments of the Invention

The engraving mill according to an aspect of the invention has a clamping shank 2 and an even number of teeth/flutes. Its essence is that the total cutting length of the cutting edge 6 of each tooth is divided by gaps into shorter sections, i.e., the cutting edges 4. The cutting edges 4 and the gaps 5 are of equal length. The cutting edges 4 on one tooth overlap the gaps 5 on the following tooth.

In plane 7, perpendicular to the axis of the mill and passing through any point of the main part of the total cutting length of the tooth, it holds that on one tooth there is a cutting edge 4 and on the following tooth there is a gap 5.

This geometric arrangement of the cutting edges 4 and gaps 5 results in narrower chips, which, however, have twice the thickness. The total amount of material being removed remains the same. But it is the chip thickness that is crucial.

A larger chip thickness results in a shift, as shown in Table 1, to an area of lower specific cutting force, in other words, a lower specific cutting resistance. Expressed as a percentage, this is approximately 15%. This task is assisted by the use of knowledge from the theory of machining specific cutting resistance.

The table uses a reference material for the workpiece, steel 42CRMo4.

**Table 1**

| Material | Material strength N/mm² | Specific cutting force Kc 1.1 N/mm² | Specific cutting force Kc / N/mm² for chip thickness in mm. | | | | | | | | |
|---|---|---|---|---|---|---|---|---|---|---|---|
| | | | 0.025 | 0.04 | 0.063 | 0.1 | 0.16 | 0.025 | 0.4 | 0.63 | 1 |
| 42 CR Mo 4 | 730 | 1550 | 3220 | 2940 | 2680 | 2450 | 2230 | 2040 | 1860 | 1700 | 1550 |

From Table 1, it is evident that the specific cutting force is affected by the chip thickness, i.e., the larger the chip thickness, the smaller the specific force, and thus the resistance on the cutting edge 4. This quantity, if multiplied by the total chip width L2 - the total cutting edge length 6, would determine the absolute cutting force acting on one tooth. This insight made it possible to design functional tools in this solution with an aspect ratio L/D = 5.

The discipline of engraving products and their semi-finished products from solid material raises another equally serious issue, namely the removal of chips from the cutting area of the narrow groove 3. Internal coolant or air supply is considered standard. The microgeometry of the proposed tools is based on the shape of the chips, which are not prone to jamming in groove 3, even during frequent changes in the curved trajectory of the tool path.

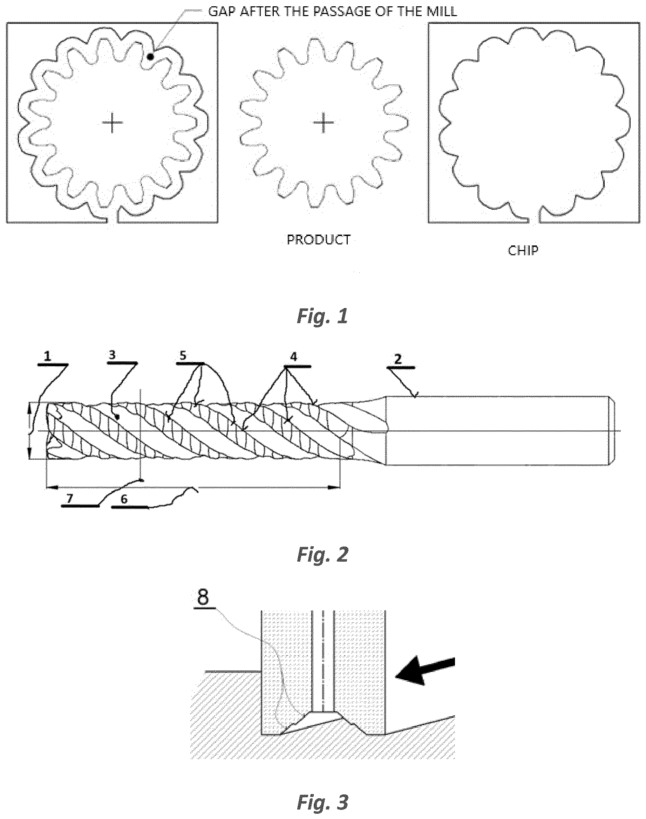

Fig. 1 shows the cutting process of a specific gear pinion with module M 4.5, Z 15, and a width of 30 mm. This pinion could be mounted into a less demanding gear transmission without any further modifications. The pinion was machined on a three-axis CNC milling machine using a tool according to this invention design, with a diameter of 1D = 6 mm and a cutting length of 31 mm. The base material of the pinion was steel 12050.

The face of the milling cutter is equipped with a concave cutting edge 8 to allow inclined or helical plunging to the full depth of the cutting groove.

A prerequisite for the safe functionality of the cutting process is to design, for each machined material, the optimal parameters of chip width and thickness with respect to the need for safe evacuation of the chip space, for example, in the root area of a gear tooth. Additional tested materials included steels designated as: 1.2312, 1.4301, and 11370, with varying strength and toughness.

The cutting shank end mill according to this technical solution will find application especially in mechanical engineering, the automotive and aerospace industries, and similar fields.

### List of reference signs

1) Diameter of the engraving end mill
2) Clamping shank of the engraving end mill
3) Chip evacuation groove
4) Cutting edges
5) Gaps
6) Total cutting edge length
7) Plane perpendicular to the axis of the mill
8) Concave cutting edge

## Claims

1. A cutting shank end mill comprising a clamping shank (2) and an even number of teeth/flutes, ***characterized in that*** a total cutting length (6) of a cutting edge of each tooth is divided into gaps (5) into individual-and cutting edges (4), wherein the cutting edges (4) which are as long as the gaps (5), and the cutting edges (4) on one tooth overlap the gaps (5) on a following tooth, wherein, in a plane (7) perpendicular to an axis of the mill and passing through any point of the main part of the total cutting length (6), on the one tooth there is one of the cutting edges (4) and on the following tooth there is one of the gaps (5).

2. The cutting shank end mill according to claim *1, **characterized in that*** a face of the mill is provided with at least a simple concave cutting edge (8) to allow inclined or helical plunging to a full depth of the cutting flute.
